# EUROPÄISCHE PATENTSCHRIFT

(11) **EP 4 046 703 B1**
(45) Veröffentlichungstag und Bekanntmachung des Hinweises auf die Patenterteilung: **28.01.2026**
(21) Anmeldenummer: 21020080.4
(22) Anmeldetag: 18.02.2021
(51) Int. Cl.: B01D 53/86, B01J 8/02, B01J 19/00

(54) **REAKTOR MIT IM BETRIEB AUSTAUSCHBARER KATALYSATOREINHEIT UND VERFAHREN ZUM AUSTAUSCH EINER KATALYSATOREINHEIT**
REACTOR WITH CATALYST UNIT REPLACEABLE DURING OPERATION AND METHOD FOR REPLACING A CATALYST UNIT
RÉACTEUR POURVU D'UNITÉ DE CATALYSEUR INTERCHANGEABLE LORS DE L'UTILISATION ET PROCÉDÉ DE REMPLACEMENT D'UNE UNITÉ DE CATALYSEUR

(43) Veröffentlichungstag der Anmeldung: 24.08.2022
(73) Patentinhaber: L'Air Liquide, Société Anonyme pour l'Etude et l'Exploitation des Procédés Georges Claude, 75007 Paris (FR)
(72) Erfinder: Coscia, Antonio, 60439 Frankfurt am Main (DE); Ulber, Dieter, 60439 Frankfurt am Main (DE); Cobbaut, Jan, 1130 Bruxelles (BE); De Pauw, Michael, 1130 Bruxelles (BE)
(74) Vertreter: Air Liquide

(56) Entgegenhaltungen:
- WO-A1-01/10539
- CN-A- 110 585 920
- US-A- 5 071 629

## Beschreibung

### Technisches Gebiet der Erfindung

Die Erfindung betrifft einen Reaktor, aufweisend eine im laufenden Betrieb austauschbare Katalysatoreinheit für unterbrechungsfreie Wartung des Reaktors. Die Erfindung betrifft ferner ein Verfahren zur Entnahme einer Katalysatoreinheit aus einem Reaktor, ein Verfahren zum Einsetzen einer Katalysatoreinheit in einen Reaktor sowie ein Verfahren zum Austausch einer Katalysatoreinheit eines Reaktors.

### Stand der Technik

Bei der Reinigung von Abgasen und Rauchgasen in großtechnischen Verbrennungsanlagen, Reformeröfen oder Gasturbinen findet eine Konvertierung von im Abgas oder Rauchgas enthaltenen giften Gasen zu ungiftigen Gasen an mehr oder weniger selektiven Katalysatoren statt. So ist zum Beispiel die selektive katalytische Umwandlung von Stickoxiden, kurz NOx, mit Hilfe von Ammoniak zu Stickstoff (Komproportionierungsreaktion) an einem Übergangsmetalloxidkatalysator wie Titandioxid bekannt. Das Verfahren ist auch als selektive katalytische Reduktion (*selective catalytic reduction - SCR*) bekannt und die eingesetzten Katalysatoren werden entsprechend als SCR-Katalysatoren bezeichnet.

In der Praxis sind diese Katalysatoren in der sogenannten Konvektionsstrecke innerhalb eines Kanals meist als Katalysatormodule übereinander innerhalb eines gitterartigen Metallrahmens, beispielsweise einem Stapelrahmen, installiert. Die Wartung des Katalysators, also die Reinigung oder der Austausch des Katalysators, erfordert einen Anlagenstopp. Die Wartung kann beispielsweise aufgrund einer Verstopfung des Katalysators durch Rauchgaspartikel erforderlich werden oder mit der Erschöpfung des Katalysators, welche einen Austausch einzelner oder aller Katalysatormodule erfordert. Verstopfungen können durch feuerfesten Staub oder über den Brennstoff oder die Luft eingebrachte Fremdkörper verursacht werden. Unerwartete Verstopfungen führen insbesondere in Reformeröfen zu einer Einschränkung des Anlagendurchsatzes oder erfordern eine Verschiebung eines geplanten Wartungsstopps der Anlage. Eine unerwartete Verringerung der Katalysatoraktivität kann ebenfalls einen Anlagenstopp erzwingen, da bestimmte gesetzlich vorgeschriebene Grenzwerte, wie NOx - Grenzwerte, nicht mehr erreicht werden können.

Die Katalysatoraktivität nimmt mit der Zeit stets ab. Da der Katalysator nur während eines Anlagenstillstands ausgetauscht werden kann, ist die Wahrscheinlichkeit gering dass ein Katalysator gerade dann sein Lebensende erreicht, wenn ein Wartungsstopp der Anlage geplant ist. Der Betreiber der Anlage ist in diesem Fall gezwungen, den Katalysator auszutauschen, obwohl dieser noch über eine ausreichende Aktivität verfügen würde. Dies steigert die Betriebskosten (opex) der Anlage in unnötiger Weise. Die Periodizität der Wartungsstopps hängt dabei von vielen Faktoren ab, wie der Abnahme durch einen Kunden oder eine Behörde, gesetzlich vorgeschriebene Prüfungen oder die Aktivität anderer in der Anlage installierter Katalysatoren, wie zum Beispiel die Aktivität der Nickelkatalysatoren in den Reformerrohren eines Reformerofens.

Bei der Planung einer neuen Anlage muss die Menge des installierten Katalysators ausreichend hoch sein, um den geplanten Wartungszyklus zu erreichen. Ein ausreichend großer Reaktor und die höhere Menge an Katalysator steigert somit auch in unnötigerweise die Investitionskosten (capex).

Eine größere Menge an Katalysator als eigentlich erforderlich führt auch zu einem größeren Gesamtdruckabfall über die Abgas- oder Rauchgasreinigungseinheit. Im Falle einer Dampfreformierungseinheit (Herstellung von Synthesegas aus Erdgas) kann der Druckabfall über eine SCR-Einheit bis zu 30 % des Gesamtdruckabfalls des Abgasstrangs ausmachen. Der Betrieb mit einem verstopften SCR-Katalysator kann diesen Wert sogar auf 70-80 % steigern.

In bekannten Reaktoren ist der Austausch der Katalysatormodul-Stapel nur möglich, wenn die Anlage außer Betrieb genommen wird. Üblicherweise sind die Katalysatoreinheiten (Katalysatormodul-Stapel) innerhalb des Reaktorgehäuses in einem schachtartigen Rahmen angeordnet und werden durch Öffnen einer Abdeckung, beispielsweise auf der Reaktoroberseite, entnommen und anschließend die neue Katalysatoreinheit wieder eingesetzt. Während des Öffnens der Abdeckung im laufenden Betrieb erfolgte entweder eine Abgasaustritt aus dem Abgaskanal oder ein Eintritt von Falschluft in den Abgaskanal, abhängig von den jeweiligen Druckverhältnissen. Aus dem Rauchgaskanal austretendes Abgas oder Rauchgas ist jedoch sicherheitstechnisch bedenklich und kann zu hohen Systemdruckschwankungen führen. Auch der Eintritt von Falschluft kann zu höheren Systemdruckschwankungen führen. Die Konsequenz ist, dass die Anlage vor dem Öffnen des Reaktorgehäuses in jedem Fall gestoppt werden muss, ein Austausch während dem laufenden Betrieb somit nicht möglich ist.

US 5,071,629 offenbart eine Vorrichtung zur Rauchgasbehandlung, umfassend ein aus mehreren Blöcken aufgebautes Katalysatorbett. Blöcke des Katalysatorbetts können während des Betriebs recycelt werden. Dafür werden Blöcke des Katalysatorbetts aus dem Rauchgasstrom entnommen, um Ascheansammlungen zu entfernen und um eine Oberflächenbehandlungen zur Aufrechterhaltung der Katalysatoraktivität durchzuführen. Wenn ein Block des Katalysatorbetts aus dem Rauchgasstrom entnommen wird, wird ein zuvor gereinigter und behandelter Block wieder in den Gasstrom eingebracht. Die Behandlung des Rauchgases wird während des Recyclings des Katalysatorbetts nicht unterbrochen.

### Beschreibung der Erfindung

Eine Aufgabe der vorliegenden Erfindung besteht darin, die vorgenannten Nachteile des Standes der Technik zumindest teilweise zu überwinden.

Insbesondere besteht eine Aufgabe der vorliegenden Erfindung darin, einen Reaktor vorzuschlagen, welcher den Austausch des Katalysators unabhängig von geplanten Wartungszyklen ermöglicht.

Eine weitere Aufgabe der vorliegenden Erfindung besteht darin, ein Verfahren vorzuschlagen, welches den Austausch des Katalysators unabhängig von geplanten Wartungszyklen ermöglicht.

Insbesondere besteht eine Aufgabe der vorliegenden Erfindung darin, einen Reaktor und eine Verfahren vorzuschlagen, welches den Austausch des Abgas-Katalysators im laufenden Betrieb ermöglicht.

Ein Beitrag zur mindestens teilweisen Erfüllung mindestens einer der obigen Aufgaben wird durch die unabhängigen Ansprüche geleistet. Die abhängigen Ansprüche stellen bevorzugte Ausführungsformen bereit, die zur mindestens teilweisen Erfüllung mindestens einer der Aufgaben beitragen. Bevorzugte Ausgestaltungen von Bestandteilen einer erfindungsgemäßen Kategorie sind, soweit zutreffend, ebenso bevorzugt für gleichnamige oder entsprechende Bestandteile einer jeweils anderen erfindungsgemäßen Kategorie.

Die Ausdrücke "aufweisend", "umfassend" oder "beinhaltend" etc. schließen nicht aus, dass weitere Elemente, Inhaltsstoffe etc. enthalten sein können. Der unbestimmte Artikel "ein" schließt nicht aus, dass eine Mehrzahl vorhanden sein kann.

Die Lösung zumindest einer der vorgenannten Aufgaben erfolgt zumindest teilweise durch
einen Reaktor, insbesondere einen Reaktor zur Reinigung von Abgasen, aufweisend
- ein Gehäuse, aufweisend zumindest eine in einen Gehäuseschacht mündende Gehäuseöffnung;
- eine innerhalb des Gehäuseschachts angeordnete, innerhalb des Gehäuseschachts bewegbare und aus dem Gehäuseschacht herausziehbare Katalysatoreinheit, wobei die Katalysatoreinheit ein oder mehrere Katalysatormodul(e) umfasst;
- ein die Gehäuseöffnung umschließendes Dichtungsgehäuse, aufweisend eine erste Seite und eine zweite Seite, wobei das Dichtungsgehäuse auf der ersten Seite eine im Bereich der Gehäuseöffnung angeordnete erste Öffnung aufweist und eine auf der zweiten Seite angeordnete zweite Öffnung aufweist;
- ein erstes, im Bereich der Gehäuseöffnung und der ersten Öffnung des Dichtungsgehäuses angeordnetes, bewegliches Abdeckelement, welches die Gehäuseöffnung in geschlossenem Zustand abdeckt;
- ein zweites, im Bereich der zweiten Öffnung des Dichtungsgehäuses angeordnetes, bewegliches Abdeckelement, welches die zweite Öffnung des Dichtungsgehäuses in geschlossenem Zustand abdeckt;
- ein erstes, im Bereich der Gehäuseöffnung und der ersten Öffnung des Dichtungsgehäuses angeordnetes Dichtungselement;
- ein zweites, im Bereich der zweiten Öffnung des Dichtungsgehäuses angeordnetes Dichtungselement;
- ein an einem ersten Ende der Katalysatoreinheit angeordnetes und mit einem Katalysatormodul verbundenes Erweiterungsmodul, welches sich durch die Gehäuseöffnung hindurch und zumindest teilweise durch das Dichtungsgehäuse hindurch erstreckt, wobei

- das erste Dichtungselement so angeordnet ist, dass es den Gehäuseschacht in Kontakt mit der Katalysatoreinheit bei geöffnetem zweitem Abdeckelement gegen die Umgebung abdichtet.

Der erfindungsgemäße Reaktor ermöglicht den Austausch von Katalysatoreinheiten im laufenden Betrieb. Der Austausch im laufenden Betrieb kann auch als online-Austausch bezeichnet werden.

Erfindungsgemäß ist ein Dichtungsgehäuse vorgesehen, welches die Öffnung des Reaktorgehäuses umschließt. Das Dichtungsgehäuse verfügt über zwei Öffnungen. In einem Beispiel handelt es sich bei der ersten Öffnung um eine untere Öffnung und bei der zweiten Öffnung um eine obere Öffnung, wenn der Austausch der Katalysatoreinheiten von einer Oberseite des Reaktors erfolgt. Das Dichtungsgehäuse ist beispielsweise rund oder quaderförmig oder rohrförmig ausgestaltet, wobei zwei gegenüberliegende Seiten des Rohres oder des Quaders die beiden Öffnungen aufweisen. Im Bereich der ersten Öffnung des Dichtungsgehäuses, welche die Gehäuseöffnung des Reaktors vorzugsweise einschließt, ist ein erstes Dichtungselement und ein erstes bewegliches Abdeckelement vorgesehen. Im Bereich der zweiten Öffnung des Dichtungsgehäuses, welche relativ zur ersten Öffnung beispielsweise am anderen Ende des Dichtungsgehäuses angeordnet ist, ist ein zweites Dichtungselement und ein zweites bewegliches Abdeckelement vorgesehen. Die erfindungsgemäße Anordnung der Abdeckelemente und der Dichtungselemente ermöglicht das Öffnen und die Entnahme, sowie die Wiedereinführung einer Katalysatoreinheit in einer Weise, dass trotz geöffnetem Reaktor während des gesamten Austauschvorgangs kein Falschlufteintritt erfolgen kann, sowie kein Abgasaustritt erfolgen kann.

Der erfindungsgemäße Reaktor verfügt ferner über ein an einem ersten Ende der Katalysatoreinheit angeordnetes Erweiterungsmodul. Das Erweiterungsmodul bildet einen Teil der Katalysatoreinheit. Eine Katalysatoreinheit umfasst somit ein oder mehrere Katalysatormodul(e) und zumindest ein Erweiterungsmodul. Das Erweiterungsmodul erstreckt sich durch die Gehäuseöffnung hindurch und ragt zumindest teilweise in das Dichtungsgehäuse hinein, erstreckt sich somit räumlich zumindest teilweise durch das Dichtungsgehäuse hindurch. Das Erweiterungsmodul dient beispielsweise der Aufnahme durch eine Entnahmevorrichtung, beispielsweise einen Kran. Das Erweiterungsmodul ist im Betrieb gegebenenfalls gar nicht oder nur teilweise innerhalb des Teils des Gehäuseschachts angeordnet, welcher von Abgasen durchströmt wird. In einem Beispiel ist das Erweiterungsmodul daher nicht mit Katalysator befüllt.

Der Reaktor umfasst in der Regel eine Vielzahl von in Flussrichtung des Abgasstroms hintereinander und/oder seitlich zueinander angeordnete Gehäuseschächte, wobei jeder Gehäuseschacht eine Katalysatoreinheit aufnimmt. In einem Beispiel weist der Reaktor somit eine Mehrzahl von Katalysatoreinheiten auf. Entsprechend ist für jeden der Gehäuseschächte und Katalysatoreinheiten ein dediziertes Dichtungsgehäuse vorgesehen. Dadurch wird sichergestellt, dass die Abgasreinigung während des Austauschs einer Katalysatoreinheit im laufenden Betrieb trotz des Fehlens einer Katalysatoreinheit weiterhin ordnungsgemäß arbeitet.

Dabei können die einzelnen Katalysatoreinheiten unterschiedliche Dimensionen aufweisen. In einem Beispiel weist eine in Flussrichtung des Abgasstroms zuerst angeordnete Katalysatoreinheit eine geringere durchströmte Länge auf als eine nachfolgend in Flussrichtung des Abgasstroms angeordnete Katalysatoreinheit. Treten Verstopfungen an einer Katalysatoreinheit auf, so betrifft dies häufig die in Flussrichtung des Abgasstroms zuerst angeordnete Katalysatoreinheit. Es ist dann von Vorteil, wenn im Falle einer Verstopfung und gegebenenfalls daraus resultierenden Deaktivierung einer Katalysatoreinheit die kleinere Katalysatoreinheit, in diesem Fall die in Flussrichtung des Abgasstroms zuerst angeordnete Katalysatoreinheit, ausgetauscht werden muss.

Der Reaktor ist zur Reinigung von Abgasen ausgelegt. Dabei umfasst der Begriff "Abgase" erfindungsgemäß jede Form von Gas, die aufgrund eines Gehalts an giftigen und/oder umweltschädlichen Gasbestandteilen einer katalytischen Abgasreinigung zugänglich ist. Insbesondere sind dabei auch Rauchgase umfasst.

Der Katalysator ist insbesondere ein SCR-Katalysator zur Entfernung von Stickoxiden (NOx) aus dem Abgas. In einem Beispiel umfasst der Reaktor daher auch eine Vorrichtung zum Einspritzen von Ammoniak, Harnstofflösung oder einer anderen geeigneten Verbindung zur Umsetzung von Stickoxiden zu Stickstoff im Rahmen einer Komproportionierungsreaktion.

Der Gehäuseschacht ist beispielsweise als abgasdurchlässiges Metallgitter oder Metallrahmen ausgestaltet. In jedem Fall ist der Gehäuseschacht so ausgelegt, dass er den ungehinderten Durchgang von Abgasen zu den Katalysatormodulen ermöglicht und eine führungsrahmenähnliche Struktur aufweist, so dass die Katalysatoreinheiten innerhalb des Gehäuseschachts beispielsweise bei vertikal eingebauten Katalysatoreinheiten nach oben und nach unten bewegbar ist. Dadurch ist die Katalysatoreinheit aus dem Gehäuseschacht herausziehbar und wieder einsetzbar.

Das erste bewegliche Abdeckelement ist im Bereich der Gehäuseöffnung des Reaktors angeordnet und deckt die Gehäuseöffnung in geschlossenem Zustand, das heißt bei verschlossenem Abdeckelement, ab. In geschlossenem Zustand des ersten Abdeckelements ist kein Luftaustausch zwischen dem Reaktor oder dem Gehäuseschacht und der darin befindlichen Katalysatoreinheit und dem Dichtungsgehäuse und einer äußeren Umgebung möglich. Das erste Abdeckelement ist in einem Beispiel als Klappe oder Tür ausgestaltet und verfügt über ein Drehgelenk oder einen anderen Mechanismus zum Öffnen und Schließen.

Das zweite bewegliche Abdeckelement ist im Bereich der zweiten Öffnung des Dichtungsgehäuses angeordnet. Es deckt die zweite Öffnung des Dichtungsgehäuses in geschlossenem Zustand des zweiten Abdeckelements ab. In geschlossenem Zustand des zweiten Abdeckelements ist kein Luftaustausch zwischen einer äußeren Umgebung und dem Dichtungsgehäuse und/oder dem Gehäuseschacht und der darin befindlichen Katalysatoreinheit möglich. Ist das erste Abdeckelement geöffnet, ist ein Luftaustausch zwischen dem Dichtungsgehäuse und dem Gehäuseschacht möglich. Sind das erste Abdeckelement und das zweite Abdeckelement geschlossen, ist das Dichtungsgehäuse sowohl gegen die äußere Umgebung als auch gegen den Gehäuseschacht abgedichtet, das heißt es findet kein Luftaustausch zwischen dem Dichtungsgehäuse und der äußeren Umgebung und dem Gehäuseschacht statt. Das zweite Abdeckelement ist in einem Beispiel als Klappe oder Tür ausgestaltet und verfügt über ein Drehgelenk oder einen anderen geeigneten Mechanismus zum Öffnen und Schließen. In einem weiteren Beispiel ist das zweite Abdeckelement als aufliegende Platte ausgestaltet, die zur Stabilisierung formschlüssig mit einer Wandung des Dichtungsgehäuses verbunden ist.

Die Dichtungselemente sind so angeordnet sind, dass sie den Gehäuseschacht durch Kontakt mit der Katalysatoreinheit gegen die Umgebung, insbesondere eine äußere Umgebung des Reaktors, abdichten, so dass Luftaustausch zwischen einer äußeren Umgebung des Reaktors und einem Innenraum des Gehäuseschachts verhindert wird. Die Dichtungselemente sind somit so angeordnet, dass sie den Gehäuseschacht durch Kontakt mit einem Katalysatormodul und/oder dem Erweiterungsmodul gegen die Umgebung abdichten. Insbesondere sind die Dichtungselemente so angeordnet, dass sie den Gehäuseschacht unabhängig von der Position des Katalysatormoduls innerhalb des Gehäuseschachts bei geöffnetem erstem und zweitem Abdeckelement gegen die äußere Umgebung abdichten.

Das erste und zweite Dichtungselement, also die Dichtungselemente, sind so angeordnet, dass bei einer Bewegung der Katalysatoreinheit innerhalb des Gehäuseschachts ein flächiger Kontakt zwischen dem jeweiligen Dichtungselement und der Katalysatoreinheit hergestellt wird. Der flächige Kontakt zwischen einem Dichtungselement und der Katalysatoreinheit besteht zwischen dem jeweiligen Dichtungselement oder den Dichtungselementen und/oder einem Katalysatormodul oder Erweiterungsmodul der Katalysatoreinheit. Durch den flächigen Kontakt wird der Luftaustausch zwischen einem Innenraum des Gehäuseschachts, und damit einem Innenraum des Reaktors, und einer äußeren Umgebung des Reaktors verhindert.

Das erste und das zweite Dichtungselement können je nach mechanischer Ausgestaltung auch als eine einzige Dichtung ausgestaltet sein, wobei diese einzige Dichtung dann das erste und das zweite Dichtungselement aufweist. Beispielsweise kann es sich um eine einzige zylinderförmige Dichtung handeln, welche in einem ersten Bereich und einem zweiten Bereich eine Verdickung aufweist, wobei die Verdickung den flächigen Kontakt zur Katalysatoreinheit bewirkt.

Eine Ausführungsform des Reaktors ist dadurch gekennzeichnet, dass bei vollständig in den Reaktor eingesetzter Katalysatoreinheit
- das erste Abdeckelement geöffnet ist und
- das zweite Abdeckelement geschlossen ist.

Bei vollständig in den Reaktor oder Gehäuseschacht eingesetzter Katalysatoreinheit ist das erste Abdeckelement geöffnet, da es sich im Bereich der Gehäuseöffnung befindet, durch die sich das Erweiterungselement hindurch erstreckt.

Eine Ausführungsform des Reaktors ist dadurch gekennzeichnet, dass das erste Dichtungselement so angeordnet ist, dass es den Gehäuseschacht in Kontakt mit der Katalysatoreinheit bei geöffnetem zweitem Abdeckelement gegen die Umgebung abdichtet.

Das erste Dichtungselement ist so angeordnet, dass bei vollständig in den Reaktor eingesetzter Katalysatoreinheit Kontakt zwischen der Katalysatoreinheit und dem ersten Dichtungselement besteht, so dass der Gehäuseschacht gegen die äußere Umgebung abgedichtet wird. Bei vollständig in den Reaktor eingesetzter Katalysatoreinheit besteht der Kontakt hier zwischen dem ersten Dichtungselement und dem Erweiterungsmodul. Wird die Katalysatoreinheit beispielsweise durch die Gehäuseöffnung hindurch aus dem Gehäuseschacht herausbewegt, besteht der Kontakt im Verlauf der Bewegung zunächst zwischen dem ersten Dichtungselement und zunächst dem Erweiterungsmodul, anschließend zwischen dem ersten Dichtungselement und dem Erweiterungsmodul sowie einem Katalysatormodul, und anschließend zwischen dem ersten Dichtungselement und einem Katalysatormodul.

Eine Ausführungsform des Reaktors ist dadurch gekennzeichnet, dass bei teilweise aus dem Gehäuseschacht herausgezogener Katalysatoreinheit das erste Abdeckelement und das zweite Abdeckelement so angeordnet sind, dass
- das erste Abdeckelement geöffnet ist, und
- das zweite Abdeckelement geöffnet ist.

Wurde die Katalysatoreinheit teilweise aus dem Gehäuseschacht herausgezogen, beispielsweise zu einem Viertel der Länge der Katalysatoreinheit, sind sowohl das erste Abdeckelement als auch das zweite Abdeckelement geöffnet. Es besteht jetzt ein flächiger Kontakt zwischen der Katalysatoreinheit und dem ersten Dichtungselement oder zwischen der Katalysatoreinheit und dem ersten und dem zweiten Dichtungselement.

Dadurch findet auch bei geöffnetem ersten und zweiten Abdeckelement kein Luftaustausch zwischen dem Gehäuseschacht und der äußeren Umgebung statt.

Eine Ausführungsform des Reaktors ist dadurch gekennzeichnet, dass bei vollständig aus dem Gehäuseschacht entfernter Katalysatoreinheit und teilweise innerhalb des Dichtungsgehäuses angeordneter Katalysatoreinheit das erste Abdeckelement und das zweite Abdeckelement so angeordnet sind, dass
- das erste Abdeckelement geöffnet oder geschlossen ist und
- das zweite Abdeckelement geöffnet ist.

Die Katalysatoreinheit umfasst ein erstes und ein zweites Ende. Die Katalysatoreinheit wird vom ersten Ende aus aus dem Gehäuseschacht herausgezogen, so dass sich das zweite Ende über die längste Zeit des Vorgangs noch innerhalb des Gehäuseschachts befindet. Erst gegen Ende des Herausziehvorgans, wenn die Katalysatoreinheit fast vollständig entfernt wurde, befindet sich das zweite Ende der Katalysatoreinheit innerhalb des Dichtungsgehäuses. In dieser Phase wird der Gehäuseschacht zumindest über flächigen Kontakt zwischen der Katalysatoreinheit und dem zweiten Dichtungselement gegen die äußere Umgebung abgedichtet. In diesem Zustand ist das zweite Abdeckelement geöffnet. Das erste Abdeckelement kann geöffnet oder geschlossen sein. Es wird geschlossen, bevor keine Kontakt mehr zwischen der Katalysatoreinheit und dem zweiten Dichtungselement besteht, um Luftaustausch zwischen einer äußeren Umgebung des Reaktors und dem Gehäuseschacht zu verhindern.

Eine Ausführungsform des Reaktors ist daher dadurch gekennzeichnet, dass bei vollständig aus dem Gehäuseschacht entfernter Katalysatoreinheit und teilweise innerhalb des Dichtungsgehäuses angeordneter Katalysatoreinheit das erste Dichtungselement und das zweite Dichtungselement so angeordnet sind, dass
- das zweite Dichtungselement den Gehäuseschacht in Kontakt mit der Katalysatoreinheit gegen die Umgebung abdichtet.

Eine Ausführungsform des Reaktors ist weiterhin dadurch gekennzeichnet, dass bei vollständig aus dem Gehäuseschacht und aus dem Dichtungsgehäuse herausgezogener Katalysatoreinheit
- das erste Abdeckelement geschlossen ist, und
- optional das zweite Abdeckelement geschlossen ist.

Wurde die Katalysatoreinheit soweit aus dem Gehäuseschacht herausgezogen, dass nur noch Kontakt zwischen der Katalysatoreinheit und dem zweiten Dichtungselement besteht, wird das erste Abdeckelement geschlossen, so dass der Reaktor insgesamt über die abgedeckte Gehäuseöffnung verschlossen ist. In einem nächsten Schritt wird die Katalysatoreinheit vollständig auch aus dem Dichtungsgehäuse herausgezogen, um als nächstes gegen eine neue Katalysatoreinheit ausgetauscht zu werden. In dieser Phase kann das zweite Abdeckelement geöffnet bleiben oder geschlossen werden.

Gleiche Betrachtungen gelten in Bezug auf die vorgenannten Ausführungsformen auch für den umgekehrten Fall, das heißt zu durchlaufende Zustände beim Einsetzen einer Katalysatoreinheit in den erfindungsgemäßen Reaktor.

Die Aufgaben der Erfindung werden weiterhin zumindest teilweise gelöst durch ein Verfahren zur Entnahme einer Katalysatoreinheit aus einem Reaktor, insbesondere eines Reaktors zur Reinigung von Abgasen, wobei der Reaktor eine in einen Gehäuseschacht mündende Gehäuseöffnung und eine innerhalb des Gehäuseschachts angeordnete Katalysatoreinheit umfasst, wobei die Katalysatoreinheit ein oder mehrere Katalysatormodul(e) umfasst, und wobei der Reaktor ein Dichtungsgehäuse aufweist, wobei das Dichtungsgehäuse die Gehäuseöffnung umschließt und ein erstes und zweites bewegliches Abdeckelement sowie ein erstes und zweites Dichtungselement aufweist, und an einem ersten Ende der Katalysatoreinheit ein mit einem Katalysatormodul verbundenes Erweiterungsmodul angeordnet ist, welches sich bei in den Gehäuseschacht eingesetzter Katalysatoreinheit durch die Gehäuseöffnung hindurch und zumindest teilweise durch das Dichtungsgehäuse hindurch erstreckt, wobei das Verfahren die folgenden Schritte aufweist:
- Bereitstellen des Reaktors mit vollständig in den Gehäuseschacht eingesetzter Katalysatoreinheit, geöffnetem ersten Abdeckelement und geschlossenem zweiten Abdeckelement;
- Öffnen des zweiten Abdeckelements des Dichtungsgehäuses, wodurch die Katalysatoreinheit von außen zugänglich wird und wobei der Gehäuseschacht durch das erste Dichtungselement in Kontakt mit der Katalysatoreinheit gegen die Umgebung abgedichtet wird;
- Erstes Herausziehen der Katalysatoreinheit von einem ersten Ende der Katalysatoreinheit aus dem Gehäuseschacht, wobei der Gehäuseschacht während dem ersten Herausziehen durch das erste und zweite Dichtungselement in Kontakt mit der Katalysatoreinheit gegen die Umgebung abgedichtet wird;
- Zweites Herausziehen der Katalysatoreinheit aus dem Gehäuseschacht, bis sich ein zweites Ende der Katalysatoreinheit innerhalb des Dichtungsgehäuses befindet, wobei der Gehäuseschacht während dem zweiten Herausziehen durch das zweite Dichtungselement in Kontakt mit der Katalysatoreinheit gegen die Umgebung abgedichtet wird;
- Schließen des ersten Abdeckelements, wodurch der Gehäuseschacht durch das geschlossene erste Abdeckelement gegen die Umgebung abgedichtet wird.

Vorzugsweise werden die vorgenannten Verfahrensschritte in der angegebenen Reihenfolge durchgeführt.

Das erfindungsgemäße Verfahren ist insbesondere für die Entnahme einer Katalysatoreinheit aus dem erfindungsgemäßen Reaktor im laufenden Betrieb bestimmt. Insbesondere ist das erfindungsgemäße Verfahren für die Entnahme einer verbrauchten Katalysatoreinheit aus dem erfindungsgemäßen Reaktor im laufenden Betrieb bestimmt.

Dabei wird als insbesondere initialer Verfahrensschritt zunächst der Reaktor mit vollständig in den Gehäuseschacht eingesetzter Katalysatoreinheit bereitgestellt. Die Katalysatoreinheit weist verbrauchte oder nahezu verbrauchte Katalysatormodule auf. Zu diesem Zeitpunkt des Verfahrens ist das erste Abdeckelement geöffnet, da sich das Erweiterungsmodul durch die Gehäuseöffnung des Reaktors hindurch in das Dichtungsgehäuse erstreckt. Das zweite Abdeckelement ist geschlossen, um den Luftaustausch zwischen dem Gehäuseschacht und einer äußeren Umgebung des Reaktors zu verhindern.

In einem weiteren, insbesondere anschließenden Verfahrensschritt wird das zweite Abdeckelement des Dichtungsgehäuses geöffnet. Da auch das erste Abdeckelement geöffnet ist, wird die Katalysatoreinheit von außen zugänglich. Luftaustausch ist trotz beider geöffneter Abdeckelemente nicht möglich, da das erste Dichtungselement den Gehäuseschacht durch flächigen Kontakt mit der Katalysatoreinheit gegen die äußere Umgebung abdichtet.

In einem weiteren, insbesondere anschließenden Verfahrensschritt wird die Katalysatoreinheit in einem ersten Herausziehschritt von ihrem ersten Ende aus teilweise aus dem Gehäuseschacht herausgezogen. Während dieses Schritts wird der Gehäuseschacht durch flächigen Kontakt zwischen der Katalysatoreinheit und zunächst dem ersten Dichtungselement, und anschließend dem ersten und zweiten Dichtungselement gegen die äußere Umgebung abgedichtet.

In einem weiterein, insbesondere anschließenden Verfahrensschritt wird die Katalysatoreinheit weiter aus dem Gehäuseschacht herausgezogen, bis nur noch ein flächiger Kontakt zwischen dem zweiten Dichtungselement und der Katalysatoreinheit im Bereich ihres zweiten Endes besteht. Zu diesem Zeitpunkt kann das erste Abdeckelement noch geöffnet sein, da das zweite Dichtungselement den Gehäuseschacht gegen die äußere Umgebung abdichtet.

In einem weiteren, insbesondere anschließenden Verfahrensschritt wird das erste Abdeckelement geschlossen. Dadurch ist der Gehäuseschacht durch das geschlossene erste Abdeckelement gegen die äußere Umgebung abgedichtet.

Die Katalysatoreinheit wird gemäß einer Ausführungsform des Verfahrens in einem weiteren Verfahrensschritt vollständig von dem Reaktor entfernt. Sie kann anschließend gegen eine neue Katalysatoreinheit mit frischem Katalysator ersetzt werden, welche anschließend wieder in den Reaktor eingesetzt wird. Da der Reaktor in praktisch allen großtechnisch relevanten Fällen über eine Vielzahl von Katalysatoreinheiten verfügen wird, kann der Betrieb auch bei temporär entfernter Katalysatoreinheit weiterlaufen, ohne dass es während des Austauschs zu einer Überschreitung von gesetzlich vorgeschriebenen Abgasgrenzwerten kommen kann.

Eine Ausführungsform des Verfahrens ist dadurch gekennzeichnet, dass die Entnahme der Katalysatoreinheit, insbesondere das erste und zweite Herausziehen der Katalysatoreinheit, mit Hilfe einer Befestigung einer Entnahmevorrichtung am Erweiterungsmodul erfolgt.

Das Erweiterungsmodul kann eine Befestigungsvorrichtung umfassen, welches die Befestigung einer Entnahmevorrichtung ermöglicht. Bei der Entnahmevorrichtung kann es sich beispielsweise um einen Kran handeln, wenn das Katalysatormodul von oben aus dem Reaktor entnommen wird.

Das Dichtungsgehäuse umfasst das erste und zweite bewegliche Abdeckelement, sowie das erste und zweite Dichtungselement.

Die Aufgaben der Erfindung werden weiterhin zumindest teilweise gelöst durch ein Verfahren zum Einsetzen einer Katalysatoreinheit in einen Reaktor, insbesondere eines Reaktors zur Reinigung von Abgasen, wobei der Reaktor eine in einen Gehäuseschacht mündende Gehäuseöffnung und eine innerhalb des Gehäuseschachts angeordnete Katalysatoreinheit umfasst, wobei die Katalysatoreinheit ein oder mehrere Katalysatormodul(e) umfasst, und wobei der Reaktor ein Dichtungsgehäuse aufweist, wobei das Dichtungsgehäuse die Gehäuseöffnung umschließt und ein erstes und zweites bewegliches Abdeckelement sowie ein erstes und zweites Dichtungselement aufweist, und an einem ersten Ende der Katalysatoreinheit ein mit einem Katalysatormodul verbundenes Erweiterungsmodul angeordnet ist, welches sich durch die Gehäuseöffnung hindurch und zumindest teilweise durch das Dichtungsgehäuse hindurch erstreckt, wobei das Verfahren die folgenden Schritte aufweist:
- Bereitstellen des Reaktors mit leerem Gehäuseschacht, geschlossenem ersten Abdeckelement und geöffnetem zweiten Abdeckelement;
- Erstes Einführen der Katalysatoreinheit von einem zweiten Ende der Katalysatoreinheit in das Dichtungsgehäuse, wobei der Gehäuseschacht durch das zweite Dichtungselement in Kontakt mit der Katalysatoreinheit gegen die Umgebung abgedichtet wird;
- Öffnen des ersten Abdeckelements, wodurch der Gehäuseschacht für die Katalysatoreinheit zugänglich wird;
- Zweites Einführen der Katalysatoreinheit in den Gehäuseschacht, bis die Katalysatoreinheit vollständig in den Gehäuseschacht eingesetzt ist, wobei der Gehäuseschacht während dem zweiten Einführen zunächst durch das erste und zweite Dichtungselement und anschließend das erste Dichtungselement in Kontakt mit der Katalysatoreinheit gegen die Umgebung abgedichtet wird;
- Verschließen des zweiten Abdeckelements.

Das erfindungsgemäße Verfahren ist insbesondere zum Einsetzen einer Katalysatoreinheit in den erfindungsgemäßen Reaktor im laufenden Betrieb bestimmt. Insbesondere ist das erfindungsgemäße Verfahren zum Einsetzen einer verbrauchten Katalysatoreinheit in den erfindungsgemäßen Reaktor im laufenden Betrieb bestimmt.

Dabei wird als insbesondere initialer Verfahrensschritt zunächst der Reaktor mit leerem Gehäuseschacht, geschlossenem ersten Abdeckelement und geöffnetem zweiten Abdeckelement bereitgestellt. Zu diesem Zeitpunkt des Verfahrens ist das erste Abdeckelement geschlossen, um den leeren Gehäuseschacht gegen die äußere Umgebung des Reaktors abzudichten. Das zweite Abdeckelement ist geöffnet, damit die auszutauschende Katalysatoreinheit von ihrem zweiten Ende aus durch das Dichtungsgehäuse hindurch in Richtung des Gehäuseschachts bewegt werden kann.

In einem weiteren, insbesondere anschließenden Verfahrensschritt wird die Katalysatoreinheit in einem ersten Einführschritt von ihrem zweiten Ende aus in Richtung des Gehäuseschachts bewegt, so dass der Gehäuseschacht durch das zweite Dichtungselement in Kontakt mit der Katalysatoreinheit gegen die Umgebung abgedichtet wird.

Dadurch kann das erste Abdeckelement in einem weiteren, insbesondere anschließenden Verfahrensschritt geöffnet werden, ohne dass es zu einem Luftaustausch zwischen dem Gehäuseschacht und einer äußeren Umgebung des Reaktors kommt. Dadurch wird die Katalysatoreinheit dem Gehäuseschacht zugänglich gemacht.

In einem weiteren, insbesondere anschließenden Verfahrensschritt wird die Katalysatoreinheit in einem zweiten Einführschritt in den Gehäuseschacht eingeführt, bis die Katalysatoreinheit vollständig in den Gehäuseschacht eingesetzt ist. Im Verlauf dieses zweiten Einführschritts wird der Reaktorschacht zunächst durch das erste und zweite Dichtungselement, und anschließend, sobald sich das erste Ende der Katalysatoreinheit nicht mehr auf Höhe der zweiten Öffnung des Dichtungsgehäuses befindet, nur noch durch das erste Dichtungselement gegen die äußere Umgebung des Reaktors abgedichtet.

In einem weiteren, insbesondere anschließenden und weiter bevorzugt letzten Verfahrensschritt wird das zweite Abdeckelement verschlossen. Das Einsetzen der Katalysatoreinheit ist damit abgeschlossen.

Eine Ausführungsform des erfindungsgemäßen Verfahrens ist dadurch gekennzeichnet, dass das Einsetzen der Katalysatoreinheit, insbesondere das erste und zweite Einführen der Katalysatoreinheit, mit Hilfe einer Befestigung einer Einsetzvorrichtung am Erweiterungsmodul erfolgt.

Das Erweiterungsmodul kann eine Befestigungsvorrichtung umfassen, welches die Befestigung einer Entnahmevorrichtung ermöglicht. Bei der Entnahmevorrichtung kann es sich beispielsweise um einen Kran handeln, wenn das Katalysatormodul von oben in den Reaktor eingeführt wird.

Die Aufgaben der Erfindung werden ferner zumindest teilweise gelöst durch ein Verfahren zum Austausch einer verbrauchten Katalysatoreinheit eines Reaktors, insbesondere eines Reaktors zur Reinigung von Abgasen, umfassend die Verfahrensschritte des vorgenannten Verfahrens zur Entnahme einer Katalysatoreinheit aus einem erfindungsgemäßen Reaktor sowie die Verfahrensschritte des vorgenannten Verfahrens zum Einsetzen einer Katalysatoreinheit in einen erfindungsgemäßen Reaktor. Dabei erfolgt der Austausch vorzugsweise im laufenden Betrieb des Reaktors.

### Ausführungsbeispiel

Die Erfindung wird im Folgenden durch ein Ausführungsbeispiel näher erläutert. In der folgenden detaillierten Beschreibung wird auf die beigefügten Zeichnungen verwiesen, die einen Teil des Ausführungsbeispiels bilden und in welcher illustrativ eine spezifische Ausführungsform der Erfindung dargestellt ist. In diesem Zusammenhang wird richtungsspezifische Terminologie wie "oben", "unten", "vorne", "hinten" usw. in Bezug auf die Ausrichtung der beschriebenen Figur verwendet. Da Komponenten von Ausführungsformen in einer Vielzahl von Ausrichtungen positioniert werden können, dient die richtungsspezifische Terminologie zur Veranschaulichung und ist in keiner Weise limitierend. Der Fachmann ist sich darüber im Klaren, dass andere Ausführungsformen verwendet werden können und strukturelle oder logische Änderungen vorgenommen werden können, ohne vom Schutzumfang der Erfindung abzuweichen. Die folgende detaillierte Beschreibung ist daher nicht in einem einschränkenden Sinne zu verstehen, und der Schutzumfang der Ausführungsformen wird durch die beigefügten Ansprüche definiert. Die Zeichnungen sind, soweit nicht anders angegeben, nicht maßstabsgetreu.

Es zeigt
- Figur 1: eine Ausführungsform eines erfindungsgemäßen Reaktors,
- Figur 2: eine Ausführungsform eines erfindungsgemäßen Verfahrens zur Entnahme einer Katalysatoreinheit aus einem Reaktor, und
- Figur 3: eine Ausführungsform eines erfindungsgemäßen Verfahrens zum Einsetzen einer Katalysatoreinheit in einen Reaktor.

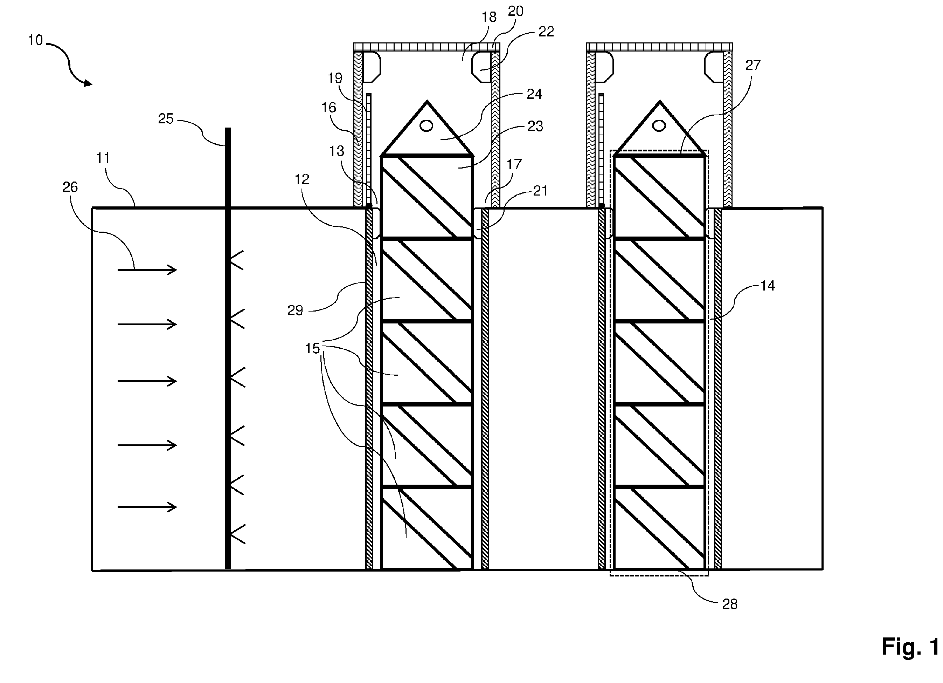

In den Figuren 1 bis 3 sind gleiche Element jeweils mit gleichen Bezugsziffern versehen.

Figur 1 zeigt eine Ausführungsform eines erfindungsgemäßen Reaktors zur Reinigung von Abgasen, hier zur Entfernung von Stickoxiden (NOx) aus den Rauchgasen eines Reformerofens. Die Rauchgase bilden sich bei der Befeuerung der vertikal im Reformerofen angeordneten Reaktorrohre, in welchen die Bildung von Synthesegas aus Erdgas und Wasserdampf stattfindet. Die Befeuerung werden üblicherweise von oben nach unten oder von unten nach oben strahlende Brenner eingesetzt, deren Rauchgase einen nicht tolerablen Gehalt an Stickoxiden aufweisen.

Der Reaktor 10 wie in Figur 1 gezeigt befindet sich im laufenden Betrieb mit eingesetzten Katalysatoreinheiten.

Ein Abgasstrom 26 tritt in Form von NOx-haltigen Rauchgase von links in einen Reaktor 10 ein. Reaktor 10 ist Teil einer größeren Anlagenkomplexes zur Herstellung von Synthesegas, ist hier jedoch aus Gründen der Übersichtlichkeit als isolierter Reaktor 10 dargestellt. Der Reaktor 10 verfügt über ein Gehäuse 11. Bevor der Abgasstrom 26 der eigentlichen Abgasbehandlung zugeführt wird, wird dieser durch eine Hilfsstoff-Einspritzung 25 mit einem Hilfsstoff vermischt. Der Hilfsstoff ist im Beispiel der Figur 1 Ammoniak. In den nachgeschalteten Katalysatoreinheiten 14 wird Ammoniak und NOx selektiv zu Stickstoff umgesetzt.

Der Reaktor 10 verfügt weiterhin über eine Vielzahl von Katalysatoreinheiten 14. Aus Gründen der Übersichtlichkeit sind in Figur 1 lediglich zwei dieser Katalysatoreinheiten 14 dargestellt. Der Abgasstrom 26, vermischt mit Ammoniak, durchströmt diese Katalysatoreinheiten 14 von links nach rechts. Ein gereinigter Abgasstrom verlässt den Reaktor 10 auf der rechten Seite.

Die Katalysatoreinheiten 14 umfassen ein erstes, in diesem Fall oberes Ende 27 und ein zweites, in diesem Fall unteres Ende 28. Die Katalysatoreinheiten 14 umfassen ferner jeweils vier Katalysatormodule 15 sowie ein Erweiterungsmodul 23, welches jeweils am obersten der vier Katalysatormodule befestigt ist. An jedem der Erweiterungsmodule 23 ist eine Befestigungsvorrichtung 24 angebracht, an welcher eine Entnahmevorrichtung und/oder eine Einsetzvorrichtung wie beispielsweise ein Kran befestigt werden kann. Jede der Katalysatoreinheiten 14 ist in einen Gehäuseschacht 12 eingesetzt, innerhalb dessen die Katalysatoreinheit 14 hin und her bewegt werden kann, in diesem Fall auf und ab bewegt werden kann. Das Erweiterungsmodul 23 erstreckt sich durch eine Gehäuseöffnung 13, welche unterhalb der Gehäuseöffnung 13 in den Gehäuseschacht 12 mündet. Der Gehäuseschacht 12 wird durch einen gasdurchlässigen Metallrahmen 29 begrenzt, welcher die Katalysatoreinheit 14 fixiert. Der Metallrahmen 29 kann beispielsweise als Metallgitter ausgestaltet sein.

Das Erweiterungsmodul 23 erstreckt sich weiterhin durch ein Dichtungsgehäuse 16, welches die Gehäuseöffnung 13 umschließt. Das Dichtungsgehäuse verfügt an seiner unteren Seite über eine erste Öffnung 17, welche die Gehäuseöffnung 13 einschließt, das heißt die Fläche der ersten Öffnung 17 schließt die Fläche der Gehäuseöffnung 13 ein. Das Dichtungsgehäuse 16 verfügt weiterhin über eine zweite Öffnung 18 an seiner oberen Seite. Im Bereich der ersten Öffnung 17 ist ein erstes Dichtungselement 21 angeordnet. Das erste Dichtungselement 21 befindet sich in flächigem Kontakt mit dem Erweiterungsmodul 23 der Katalysatoreinheit 14. Es ist im Beispiel der Figur 1 am Metallrahmen 29 befestigt. Der Metallrahmen 29 ist in der Praxis so ausgestaltet, das er die Katalysatoreinheit 14 unterhalb des Dichtungselements fixiert (nicht gezeigt). Wird die Katalysatoreinheit 14 nach oben bewegt, bleibt ein flächiger Kontakt zwischen der Katalysatoreinheit 14 und dem ersten Dichtungselement 21 bestehen, und zwar zwischen dem Erweiterungsmodul 23 und dem ersten Dichtungselement, zwischen dem Erweiterungsmodul 23 sowie einem Katalysatormodul 15 und dem ersten Dichtungselement, oder zwischen einem Katalysatormodul 15 und dem ersten Dichtungselement 21.

Im Bereich der Gehäuseöffnung 13 und der ersten Öffnung 17 des Dichtungsgehäuses ist weiterhin ein erstes bewegliches Abdeckelement 19 angeordnet. Das erste Abdeckelement 19 verfügt über ein Drehgelenk und kann die Gehäuseöffnung 13 dadurch verschließen. Dies ist möglich, wenn die Katalysatoreinheit 14 soweit aus dem Gehäuseschacht 12 herausgezogen wurde, dass sich ein zweites Ende 28 der Katalysatoreinheit ungefähr auf Höhe eines zweiten Dichtungselements 22 befindet. Das zweite Dichtungselement 22 ist im Bereich der zweiten Öffnung 18 des Dichtungsgehäuses angeordnet. In diesem Bereich ist auch ein zweites bewegliches Abdeckelement 20 angeordnet, welches in geschlossenem Zustand, wie gezeigt, die zweite Öffnung des Dichtungsgehäuses verschließt. Im Beispiel der Figur 1 ist das zweite Abdeckelement 20 als Abdeckplatt ausgestaltet. Durch entsprechende Formgebung kann die Abdeckplatte so ausgestaltet sein, dass eine sichere formschlüssige Verbindung zum Dichtungsgehäuse 16 besteht, beispielsweise um die Abdeckplatte vor einem Verrutschen zu sichern.

Das erste Dichtungselement 21 und das zweite Dichtungselement 22 sind fest mit dem Metallrahmen 29 beziehungsweise dem Dichtungsgehäuse 16 verbunden. Sie sind so angeordnet, dass beim Herausbewegen der Katalysatoreinheit 14 aus dem Gehäuseschacht 12 stets ein flächiger Kontakt zwischen zumindest einem Dichtungselement und der Katalysatoreinheit besteht, so lange das erste Abdeckelement nicht geschlossen werden kann.

Das erste Dichtungselement 21 und das zweite Dichtungselement 22 können auch als eine einzige Dichtung ausgestaltet sein, welche über entsprechende Dichtungselemente 21 und 22 verfügt, die einen flächigen Kontakt zu der Katalysatoreinheit herstellen können.

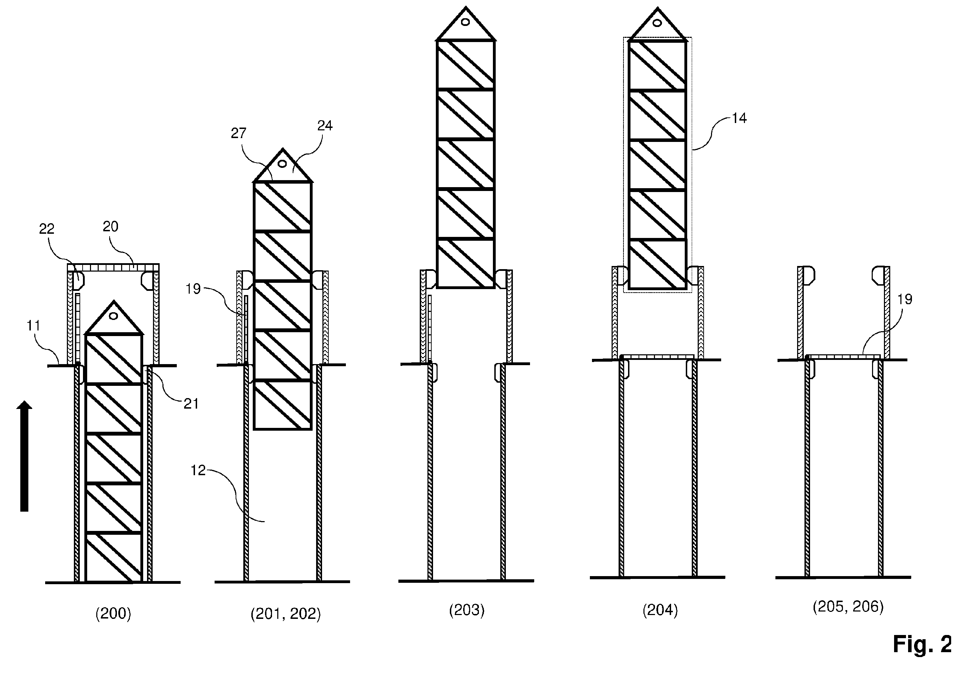

Figur 2 zeigt eine Ausführungsform eines erfindungsgemäßen Verfahrens zur Entnahme einer Katalysatoreinheit aus einem Reaktor, insbesondere dem erfindungsgemäßen Reaktor. In einem ersten Verfahrensschritt 200 wird der Reaktor 10 mit vollständig eingesetzter Katalysatoreinheit 14 bereitgestellt. Der Reaktor 10 befindet sich im laufenden Betrieb, das erste Abdeckelement 19 ist geöffnet und das zweite Abdeckelement 20 ist geschlossen.

In einem folgenden Verfahrensschritt 201 wird das zweite Abdeckelement 19 durch Abheben vom Dichtungsgehäuse 16 geöffnet. Das Katalysatormodul 14 wird dadurch von außen zugänglich und kann beispielsweise von einem Kran als Entnahmevorrichtung an der Befestigungsvorrichtung 24 befestigt werden. Durch den flächigen Kontakt zwischen dem ersten Dichtungselement 21 und der Katalysatoreinheit 14 findet kein Luftaustausch zwischen einer äußeren Umgebung des Reaktors 10 und dem Gehäuseschacht 12 statt.

In einem folgenden Verfahrensschritt 202 wird die Katalysatoreinheit 14 von ihrem ersten Ende 27 aus nach oben bewegt. Wie gezeigt besteht während der Aufwärtsbewegung ein flächiger Kontakt zwischen dem ersten Dichtungselement 21 und dem zweiten Dichtungselement 22 und der Katalysatoreinheit 14, so dass während der Aufwärtsbewegung kein Luftaustausch zwischen einer äußeren Umgebung des Reaktors und dem Gehäuseschacht 12 stattfinden kann.

In einem folgenden Verfahrensschritt 203 wird die Katalysatoreinheit 14 soweit aus dem Reaktorschacht 12 herausgezogen, bis sich ein zweites Ende 28 der Katalysatoreinheit 14 innerhalb des Dichtungsgehäuses 16 befindet und eine äußere Umgebung des Reaktors 10 nur noch durch das zweite Dichtungselement 22 in Kontakt mit der Katalysatoreinheit 14 gegen den Gehäuseschacht abgedichtet wird. In diesem Schritt wird die Katalysatoreinheit 14 soweit aus dem Gehäuseschacht 12 herausgezogen, dass das erste Abdeckelement 19 geschlossen werden kann.

Entsprechend wird das zweite Abdeckelement 19 in einem nachfolgenden Verfahrensschritt 204 geschlossen, wodurch der Gehäuseschacht 12 durch das geschlossene erste Abdeckelement 19 gegen die äußere Umgebung abgedichtet wird. Das verbrauchte Katalysatormodul kann in einem weiteren Schritt 206 vollständig entfernt und gegen ein neues Katalysatormodul ersetzt werden.

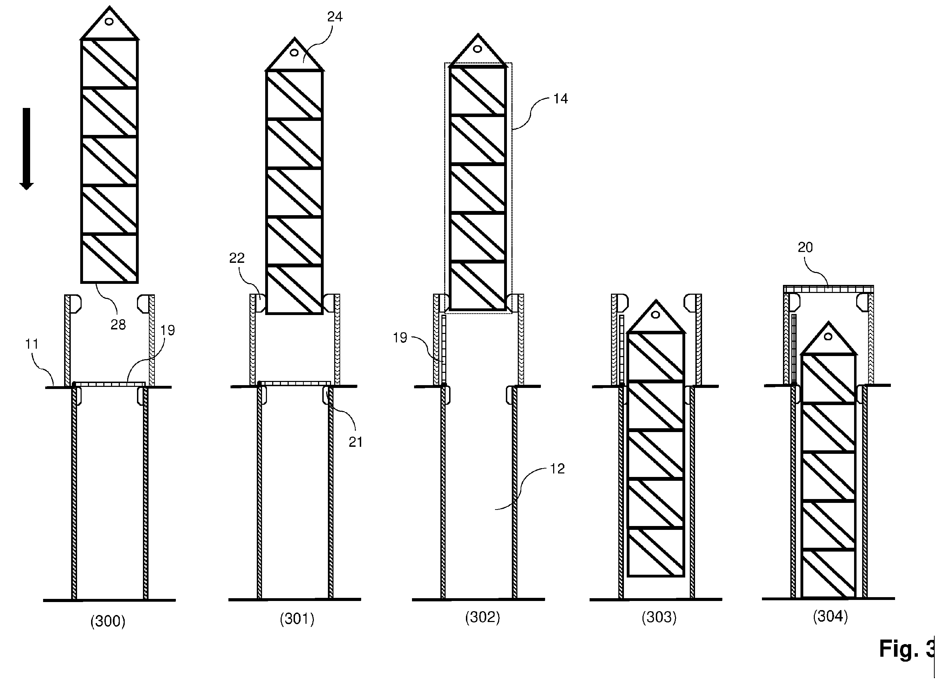

Figur 3 zeigt eine Ausführungsform eines erfindungsgemäßen Verfahrens zum Einsetzen einer Katalysatoreinheit in einen Reaktor, insbesondere zum Einsetzten einer Katalysatoreinheit in einen erfindungsgemäßen Reaktor. Bei der einzusetzenden Katalysatoreinheit handelt es sich vorzugsweise um eine neue Katalysatoreinheit mit unverbrauchtem Katalysator.

In einem ersten Verfahrensschritt 300 wird der Reaktor 10 mit leerem Gehäuseschacht 12 bereitgestellt. Dabei ist das erste Abdeckelement 19 geschlossen, um den Gehäuseschacht 12 gegen eine äußere Umgebung des Reaktors 10 abzudichten.

In einem nachfolgenden Verfahrensschritt 301 wird die Katalysatoreinheit 14 von ihrem zweiten Ende 28 aus in das Dichtungsgehäuse 16 soweit eingeführt, dass die Katalysatoreinheit 14 durch flächigen Kontakt mit dem zweiten Dichtungselement 22 den Gehäuseschacht 12 gegen eine äußere Umgebung des Reaktors abdichtet.

Durch diesen Kontakt zum zweiten Dichtungselement 22 kann das erste Abdeckelement 19 in einem nachfolgenden Verfahrensschritt 302 geöffnet werden. Dadurch wird die Katalysatoreinheit 14 dem Gehäuseschacht 12 zugänglich.

In einem weiteren Verfahrensschritt 303 wird die Katalysatoreinheit 14 weiter in den Gehäuseschacht eingeführt, bis diese vollständig in den Gehäuseschacht eingesetzt ist. Schließlich wird das zweite Abdeckelement 20 in einem weiteren Verfahrensschritt 304 geschlossen, der Reaktor ist damit wieder in seinem standardmäßigen Betriebszustand.

Das Verfahren gemäß Figur 2 eignet sich insbesondere in Verbindung mit dem Verfahren gemäß Figur 3 zum Austausch einer verbrauchten Katalysatoreinheit gegen eine neue Katalysatoreinheit im laufenden Betrieb eines Reaktors, insbesondere eines Reaktors zur Abgasbehandlung, insbesondere einem erfindungsgemäßen Reaktor.

### Bezugszeichenliste

- 10: Reaktor
- 11: Gehäuse
- 12: Gehäuseschacht
- 13: Gehäuseöffnung
- 14: Katalysatoreinheit
- 15: Katalysatormodul
- 16: Dichtungsgehäuse
- 17: Erste Öffnung des Dichtungsgehäuses
- 18: Zweite Öffnung des Dichtungsgehäuses
- 19: Erstes Abdeckelement
- 20: Zweites Abdeckelement
- 21: Erstes Dichtungselement
- 22: Zweites Dichtungselement
- 23: Erweiterungsmodul
- 24: Befestigungsvorrichtung
- 25: Hilfsstoff-Einspritzung
- 26: Abgas-Strom
- 27: Erstes Ende einer Katalysatoreinheit
- 28: Zweites Ende einer Katalysatoreinheit
- 29: Metallrahmen

## Patentansprüche

1. Reaktor (10), insbesondere Reaktor zur Reinigung von Abgasen, aufweisend
- ein Gehäuse (11), aufweisend zumindest eine in einen Gehäuseschacht (12) mündende Gehäuseöffnung (13);
- eine innerhalb des Gehäuseschachts angeordnete, innerhalb des Gehäuseschachts bewegbare und aus dem Gehäuseschacht herausziehbare Katalysatoreinheit (14), wobei die Katalysatoreinheit ein oder mehrere Katalysatormodul(e) (15) umfasst;
- ein die Gehäuseöffnung umschließendes Dichtungsgehäuse (16), aufweisend eine erste Seite und eine zweite Seite, wobei das Dichtungsgehäuse auf der ersten Seite eine im Bereich der Gehäuseöffnung angeordnete erste Öffnung (17) aufweist und eine auf der zweiten Seite angeordnete zweite Öffnung (18) aufweist;
- ein erstes, im Bereich der Gehäuseöffnung und der ersten Öffnung des Dichtungsgehäuses angeordnetes, bewegliches Abdeckelement (19), welches die Gehäuseöffnung in geschlossenem Zustand abdeckt;
- ein zweites, im Bereich der zweiten Öffnung des Dichtungsgehäuses angeordnetes, bewegliches Abdeckelement (20), welches die zweite Öffnung des Dichtungsgehäuses in geschlossenem Zustand abdeckt;
- ein erstes, im Bereich der Gehäuseöffnung und der ersten Öffnung des Dichtungsgehäuses angeordnetes Dichtungselement (21);
- ein zweites, im Bereich der zweiten Öffnung des Dichtungsgehäuses angeordnetes Dichtungselement (22);
- ein an einem ersten Ende (27) der Katalysatoreinheit angeordnetes und mit einem Katalysatormodul verbundenes Erweiterungsmodul (23), welches sich durch die Gehäuseöffnung hindurch und zumindest teilweise durch das Dichtungsgehäuse hindurch erstreckt, wobei
das erste Dichtungselement (21) so angeordnet ist, dass es den Gehäuseschacht (12) in Kontakt mit der Katalysatoreinheit (14) bei geöffnetem zweitem Abdeckelement (20) gegen die Umgebung abdichtet.

2. Reaktor nach Anspruch 1, **dadurch gekennzeichnet, dass** die Dichtungselemente (21, 22) so angeordnet sind, dass sie den Gehäuseschacht (12) durch Kontakt mit der Katalysatoreinheit (14) gegen die Umgebung abdichten, so dass Luftaustausch zwischen einer äußeren Umgebung des Reaktors (10) und einem Innenraum des Gehäuseschachts (12) verhindert wird.

3. Reaktor (10) nach einem der vorherigen Ansprüche, **dadurch gekennzeichnet, dass** bei vollständig in den Reaktor eingesetzter Katalysatoreinheit (14)
- das erste Abdeckelement (19) geöffnet ist und
- das zweite Abdeckelement (20) geschlossen ist.

4. Reaktor (10) nach einem der vorherigen Ansprüche, **dadurch gekennzeichnet, dass** bei teilweise aus dem Gehäuseschacht herausgezogener Katalysatoreinheit (14) das erste Abdeckelement (19) und das zweite Abdeckelement (20) so angeordnet sind, dass
- das erste Abdeckelement geöffnet ist, und
- das zweite Abdeckelement geöffnet ist.

5. Reaktor (10) nach einem der vorherigen Ansprüche, **dadurch gekennzeichnet, dass** bei vollständig aus dem Gehäuseschacht (12) entfernter Katalysatoreinheit (14) und teilweise innerhalb des Dichtungsgehäuses (16) angeordneter Katalysatoreinheit (14) das erste Abdeckelement (19) und das zweite Abdeckelement (20) so angeordnet sind, dass
- das erste Abdeckelement geöffnet oder geschlossen ist und
- das zweite Abdeckelement geöffnet ist.

6. Reaktor (10) nach einem der vorherigen Ansprüche, **dadurch gekennzeichnet, dass** bei vollständig aus dem Gehäuseschacht (12) entfernter Katalysatoreinheit (14) und teilweise innerhalb des Dichtungsgehäuses (16) angeordneter Katalysatoreinheit das erste Dichtungselement (21) und das zweite Dichtungselement (22) so angeordnet sind, dass
- das zweite Dichtungselement den Gehäuseschacht in Kontakt mit der Katalysatoreinheit gegen die Umgebung abdichtet.

7. Reaktor (10) nach einem der vorherigen Ansprüche, **dadurch gekennzeichnet, dass** bei vollständig aus dem Gehäuseschacht (12) und aus dem Dichtungsgehäuse (16) herausgezogener Katalysatoreinheit (14)
- das erste Abdeckelement (19) geschlossen ist, und
- optional das zweite Abdeckelement (20) geschlossen ist.

8. Reaktor (10) nach einem der vorherigen Ansprüche, **dadurch gekennzeichnet, dass** eine in Flussrichtung des Abgasstroms (26) zuerst angeordnete Katalysatoreinheit (14) eine geringere durchströmte Länge aufweist als eine nachfolgend in Flussrichtung des Abgasstroms angeordnete Katalysatoreinheit.

9. Verfahren zur Entnahme einer Katalysatoreinheit (14) aus einem Reaktor (10), insbesondere eines Reaktors zur Reinigung von Abgasen, wobei der Reaktor eine in einen Gehäuseschacht (12) mündende Gehäuseöffnung (13) und eine innerhalb des Gehäuseschachts angeordnete Katalysatoreinheit (14) umfasst, wobei die Katalysatoreinheit ein oder mehrere Katalysatormodul(e) (15) umfasst, und wobei der Reaktor ein Dichtungsgehäuse (16) aufweist, wobei das Dichtungsgehäuse die Gehäuseöffnung umschließt und ein erstes und zweites bewegliches Abdeckelement (19, 20) sowie ein erstes und zweites Dichtungselement (21, 22) aufweist, und
an einem ersten Ende (27) der Katalysatoreinheit ein mit einem Katalysatormodul verbundenes Erweiterungsmodul (23) angeordnet ist, welches sich bei in den Gehäuseschacht eingesetzter Katalysatoreinheit durch die Gehäuseöffnung hindurch und zumindest teilweise durch das Dichtungsgehäuse hindurch erstreckt, wobei
das Verfahren die folgenden Schritte aufweist:
- Bereitstellen des Reaktors mit vollständig in den Gehäuseschacht eingesetzter Katalysatoreinheit, geöffnetem ersten Abdeckelement und geschlossenem zweiten Abdeckelement;
- Öffnen des zweiten Abdeckelements des Dichtungsgehäuses, wodurch die Katalysatoreinheit von außen zugänglich wird und wobei der Gehäuseschacht durch das erste Dichtungselement in Kontakt mit der Katalysatoreinheit gegen die Umgebung abgedichtet wird;
- Erstes Herausziehen der Katalysatoreinheit von einem ersten Ende der Katalysatoreinheit aus dem Gehäuseschacht, wobei der Gehäuseschacht während dem ersten Herausziehen durch das erste und zweite Dichtungselement in Kontakt mit der Katalysatoreinheit gegen die Umgebung abgedichtet wird;
- Zweites Herausziehen der Katalysatoreinheit aus dem Gehäuseschacht, bis sich ein zweites Ende der Katalysatoreinheit innerhalb des Dichtungsgehäuses befindet, wobei der Gehäuseschacht während dem zweiten Herausziehen durch das zweite Dichtungselement in Kontakt mit der Katalysatoreinheit gegen die Umgebung abgedichtet wird;
- Schließen des ersten Abdeckelements, wodurch der Gehäuseschacht durch das geschlossene erste Abdeckelement gegen die Umgebung abgedichtet wird.

10. Verfahren nach Anspruch 9, **dadurch gekennzeichnet, dass** die Entnahme der Katalysatoreinheit (14), insbesondere das erste und zweite Herausziehen der Katalysatoreinheit, mit Hilfe einer Befestigung einer Entnahmevorrichtung am Erweiterungsmodul erfolgt.

11. Verfahren zum Einsetzen einer Katalysatoreinheit (14) in einen Reaktor (10), insbesondere eines Reaktors zur Reinigung von Abgasen, wobei der Reaktor eine in einen Gehäuseschacht (12) mündende Gehäuseöffnung (13) und eine innerhalb des Gehäuseschachts angeordnete Katalysatoreinheit (14) umfasst, wobei die Katalysatoreinheit ein oder mehrere Katalysatormodul(e) (15) umfasst, und wobei der Reaktor ein Dichtungsgehäuse (16) aufweist, wobei das Dichtungsgehäuse die Gehäuseöffnung umschließt und ein erstes und zweites bewegliches Abdeckelement (19, 20) sowie ein erstes und zweites Dichtungselement (21, 22) aufweist, und an einem ersten Ende der Katalysatoreinheit (27) ein mit einem Katalysatormodul verbundenes Erweiterungsmodul (23) angeordnet ist, welches sich durch die Gehäuseöffnung hindurch und zumindest teilweise durch das Dichtungsgehäuse hindurch erstreckt, wobei das Verfahren die folgenden Schritte aufweist:
- Bereitstellen des Reaktors mit leerem Gehäuseschacht, geschlossenem ersten Abdeckelement und geöffnetem zweiten Abdeckelement;
- Erstes Einführen der Katalysatoreinheit von einem zweiten Ende (28) der Katalysatoreinheit in das Dichtungsgehäuse, wobei der Gehäuseschacht durch das zweite Dichtungselement in Kontakt mit der Katalysatoreinheit gegen die Umgebung abgedichtet wird;
- Öffnen des ersten Abdeckelements, wodurch der Gehäuseschacht für die Katalysatoreinheit zugänglich wird;
- Zweites Einführen der Katalysatoreinheit in den Gehäuseschacht, bis die Katalysatoreinheit vollständig in den Gehäuseschacht eingesetzt ist, wobei der Gehäuseschacht während dem zweiten Einführen zunächst durch das erste und zweite Dichtungselement und anschließend das erste Dichtungselement in Kontakt mit der Katalysatoreinheit gegen die Umgebung abgedichtet wird;
- Verschließen des zweiten Abdeckelements.

12. Verfahren nach Anspruch 11, **dadurch gekennzeichnet, dass** das Einsetzen der Katalysatoreinheit (14), insbesondere das erste und zweite Einführen der Katalysatoreinheit, mit Hilfe einer Befestigung einer Einsetzvorrichtung am Erweiterungsmodul (23) erfolgt.

13. Verfahren zum Austausch einer verbrauchten Katalysatoreinheit (14) eines Reaktors (10), insbesondere eines Reaktors zur Reinigung von Abgasen, umfassend die Verfahrensschritte nach Anspruch 9 oder Anspruch 10, und nach Anspruch 11 oder Anspruch 12.

14. Verfahren nach Anspruch 13, wobei der Austausch im laufenden Betrieb des Reaktors (10) erfolgt.

## Claims

1. A reactor (10), in particular a reactor for purifying exhaust gases, comprising
- a housing (11), comprising at least one housing opening (13) leading into a housing shaft (12);
- a catalyst unit (14) arranged within the housing shaft, movable within the housing shaft and removable from the housing shaft, wherein the catalyst unit comprises one or more catalyst module(s) (15);
- a sealing housing (16) enclosing the housing opening, comprising a first side and a second side, wherein the sealing housing comprises on the first side a first opening (17) arranged in the region of the housing opening and comprises on the second side a second opening (18);
- a first movable cover element (19) arranged in the region of the housing opening and the first opening of the sealing housing, which covers the housing opening in a closed state;
- a second movable cover element (20) arranged in the region of the second opening of the sealing housing, which covers the second opening of the sealing housing in a closed state;
- a first sealing element (21) arranged in the region of the housing opening and the first opening of the sealing housing;
- a second sealing element (22) arranged in the region of the second opening of the sealing housing;
- an extension module (23) arranged at a first end (27) of the catalyst unit and connected to a catalyst module, which extends through the housing opening and at least partially through the sealing housing, wherein
the first sealing element (21) is arranged such that it seals the housing shaft (12) against the surroundings in contact with the catalyst unit (14) when the second cover element (20) is open.

2. The reactor according to claim 1, **characterized in that** the sealing elements (21, 22) are arranged such that they seal the housing shaft (12) against the surroundings by contact with the catalyst unit (14), so that air exchange between an outer surrounding of the reactor (10) and an interior of the housing shaft (12) is prevented.

3. The reactor (10) according to any one of the preceding claims, **characterized in that** when the catalyst unit (14) is fully inserted into the reactor
- the first cover element (19) is open and
- the second cover element (20) is closed.

4. The reactor (10) according to any one of the preceding claims, **characterized in that** when the catalyst unit (14) is partially withdrawn from the housing shaft, the first cover element (19) and the second cover element (20) are arranged such that
- the first cover element is open, and
- the second cover element is open.

5. The reactor (10) according to any one of the preceding claims, **characterized in that** when the catalyst unit (14) is completely removed from the housing shaft (12) and is arranged partially within the sealing housing (16), the first cover element (19) and the second cover element (20) are arranged such that
- the first cover element is open or closed and
- the second cover element is open.

6. The reactor (10) according to any one of the preceding claims, **characterized in that** when the catalyst unit (14) is completely removed from the housing shaft (12) and is arranged partially within the sealing housing (16), the first sealing element (21) and the second sealing element (22) are arranged such that
- the second sealing element seals the housing shaft in contact with the catalyst unit against the surroundings.

7. The reactor (10) according to any one of the preceding claims, **characterized in that** when the catalyst unit (14) is completely withdrawn from the housing shaft (12) and from the sealing housing (16)
- the first cover element (19) is closed, and
- optionally the second cover element (20) is closed.

8. The reactor (10) according to any one of the preceding claims, **characterized in that** a catalyst unit (14) arranged first in the flow direction of the exhaust gas stream (26) has a smaller flow-through length than a subsequently arranged catalyst unit in the flow direction of the exhaust gas stream.

9. A method for removing a catalyst unit (14) from a reactor (10), in particular a reactor for purifying exhaust gases, wherein the reactor comprises a housing opening (13) leading into a housing shaft (12) and a catalyst unit (14) arranged within the housing shaft, wherein the catalyst unit comprises one or more catalyst module(s) (15), and wherein the reactor comprises a sealing housing (16), wherein the sealing housing encloses the housing opening and comprises a first and a second movable cover element (19, 20) as well as a first and a second sealing element (21, 22), and at a first end (27) of the catalyst unit an extension module (23) connected to a catalyst module is arranged, which extends through the housing opening and at least partially through the sealing housing when the catalyst unit is inserted into the housing shaft, wherein the method comprises the following steps:
- Providing the reactor with the catalyst unit fully inserted into the housing shaft, with the first cover element open and the second cover element closed;
- Opening the second cover element of the sealing housing, whereby the catalyst unit becomes accessible from the outside and wherein the housing shaft is sealed against the surroundings by the first sealing element in contact with the catalyst unit;
- First withdrawal of the catalyst unit from a first end of the catalyst unit out of the housing shaft, wherein during the first withdrawal the housing shaft is sealed against the surroundings by the first and second sealing element in contact with the catalyst unit;
- Second withdrawal of the catalyst unit from the housing shaft until a second end of the catalyst unit is located within the sealing housing, wherein during the second withdrawal the housing shaft is sealed against the surroundings by the second sealing element in contact with the catalyst unit;
- Closing the first cover element, whereby the housing shaft is sealed against the surroundings by the closed first cover element.

10. The method according to claim 9, **characterized in that** the removal of the catalyst unit (14), in particular the first and second withdrawal of the catalyst unit, is carried out by means of fastening a removal device to the extension module.

11. A method for inserting a catalyst unit (14) into a reactor (10), in particular a reactor for purifying exhaust gases, wherein the reactor comprises a housing opening (13) leading into a housing shaft (12) and a catalyst unit (14) arranged within the housing shaft, wherein the catalyst unit comprises one or more catalyst module(s) (15), and wherein the reactor comprises a sealing housing (16), wherein the sealing housing encloses the housing opening and comprises a first and a second movable cover element (19, 20) as well as a first and a second sealing element (21, 22), and at a first end of the catalyst unit (27) an extension module (23) connected to a catalyst module is arranged, which extends through the housing opening and at least partially through the sealing housing, wherein the method comprises the following steps:
- Providing the reactor with an empty housing shaft, with the first cover element closed and the second cover element open;
- First insertion of the catalyst unit from a second end (28) of the catalyst unit into the sealing housing, wherein the housing shaft is sealed against the surroundings by the second sealing element in contact with the catalyst unit;
- Opening the first cover element, whereby the housing shaft becomes accessible for the catalyst unit;
- Second insertion of the catalyst unit into the housing shaft until the catalyst unit is fully inserted into the housing shaft, wherein during the second insertion the housing shaft is sealed against the surroundings first by the first and second sealing element and then by the first sealing element in contact with the catalyst unit;
- Closing the second cover element.

12. The method according to claim 11, **characterized in that** the insertion of the catalyst unit (14), in particular the first and second insertion of the catalyst unit, is carried out by means of fastening an insertion device to the extension module (23).

13. A method for exchanging a spent catalyst unit (14) of a reactor (10), in particular a reactor for purifying exhaust gases, comprising the method steps according to claim 9 or claim 10, and according to claim 11 or claim 12.

14. The method according to claim 13, wherein the exchange takes place during ongoing operation of the reactor (10).

## Revendications

1. Réacteur (10), en particulier un réacteur pour la purification de gaz d'échappement, comprenant
- un boîtier (11), comprenant au moins une ouverture de boîtier (13) débouchant dans un puits de boîtier (12) ;
- une unité de catalyseur (14) agencée à l'intérieur du puits de boîtier, mobile à l'intérieur du puits de boîtier et extractible du puits de boîtier, dans lequel l'unité de catalyseur comprend un ou plusieurs module(s) de catalyseur (15) ;
- un boîtier d'étanchéité (16) entourant l'ouverture du boîtier, comprenant un premier côté et un second côté, dans lequel le boîtier d'étanchéité comprend sur le premier côté une première ouverture (17) agencée dans la zone de l'ouverture du boîtier et comprend sur le second côté une seconde ouverture (18) ;
- un premier élément de recouvrement mobile (19) agencé dans la zone de l'ouverture du boîtier et de la première ouverture du boîtier d'étanchéité, qui recouvre l'ouverture du boîtier à l'état fermé ;
- un second élément de recouvrement mobile (20) agencé dans la zone de la seconde ouverture du boîtier d'étanchéité, qui recouvre la seconde ouverture du boîtier d'étanchéité à l'état fermé ;
- un premier élément d'étanchéité (21) agencé dans la zone de l'ouverture du boîtier et de la première ouverture du boîtier d'étanchéité ;
- un second élément d'étanchéité (22) agencé dans la zone de la seconde ouverture du boîtier d'étanchéité ;
- un module d'extension (23) agencé à une première extrémité (27) de l'unité de catalyseur et relié à un module de catalyseur, qui s'étend à travers l'ouverture du boîtier et au moins partiellement à travers le boîtier d'étanchéité, dans lequel
le premier élément d'étanchéité (21) est agencé de telle sorte qu'il assure l'étanchéité du puits de boîtier (12) par rapport à l'environnement en contact avec l'unité de catalyseur (14) lorsque le second élément de recouvrement (20) est ouvert.

2. Réacteur selon la revendication 1, **caractérisé en ce que** les éléments d'étanchéité (21, 22) sont agencés de telle sorte qu'ils assurent l'étanchéité du puits de boîtier (12) par rapport à l'environnement par contact avec l'unité de catalyseur (14), de sorte qu'un échange d'air entre un environnement extérieur du réacteur (10) et un espace intérieur du puits de boîtier (12) est empêché.

3. Réacteur (10) selon l'une des revendications précédentes, **caractérisé en ce que**, lorsque l'unité de catalyseur (14) est complètement insérée dans le réacteur
- le premier élément de recouvrement (19) est ouvert et
- le second élément de recouvrement (20) est fermé.

4. Réacteur (10) selon l'une des revendications précédentes, **caractérisé en ce que**, lorsque l'unité de catalyseur (14) est partiellement retirée du puits de boîtier, le premier élément de recouvrement (19) et le second élément de recouvrement (20) sont agencés de telle sorte que
- le premier élément de recouvrement est ouvert, et
- le second élément de recouvrement est ouvert.

5. Réacteur (10) selon l'une des revendications précédentes, **caractérisé en ce que**, lorsque l'unité de catalyseur (14) est complètement retirée du puits de boîtier (12) et partiellement agencée à l'intérieur du boîtier d'étanchéité (16), le premier élément de recouvrement (19) et le second élément de recouvrement (20) sont agencés de telle sorte que
- le premier élément de recouvrement est ouvert ou fermé et
- le second élément de recouvrement est ouvert.

6. Réacteur (10) selon l'une des revendications précédentes, **caractérisé en ce que**, lorsque l'unité de catalyseur (14) est complètement retirée du puits de boîtier (12) et partiellement agencée à l'intérieur du boîtier d'étanchéité (16), le premier élément d'étanchéité (21) et le second élément d'étanchéité (22) sont agencés de telle sorte que
- le second élément d'étanchéité assure l'étanchéité du puits de boîtier en contact avec l'unité de catalyseur par rapport à l'environnement.

7. Réacteur (10) selon l'une des revendications précédentes, **caractérisé en ce que**, lorsque l'unité de catalyseur (14) est complètement retirée du puits de boîtier (12) et du boîtier d'étanchéité (16)
- le premier élément de recouvrement (19) est fermé, et
- optionnellement, le second élément de recouvrement (20) est fermé.

8. Réacteur (10) selon l'une des revendications précédentes, **caractérisé en ce qu'**une unité de catalyseur (14) agencée en premier dans le sens d'écoulement du flux de gaz d'échappement (26) présente une longueur traversée plus faible qu'une unité de catalyseur agencée en aval dans le sens d'écoulement du flux de gaz d'échappement.

9. Procédé de retrait d'une unité de catalyseur (14) d'un réacteur (10), en particulier d'un réacteur pour la purification de gaz d'échappement, dans lequel le réacteur comprend une ouverture de boîtier (13) débouchant dans un puits de boîtier (12) et une unité de catalyseur (14) agencée à l'intérieur du puits de boîtier, dans lequel l'unité de catalyseur comprend un ou plusieurs module(s) de catalyseur (15), et dans lequel le réacteur comprend un boîtier d'étanchéité (16), dans lequel le boîtier d'étanchéité entoure l'ouverture du boîtier et comprend un premier et un second élément de recouvrement mobiles (19, 20) ainsi qu'un premier et un second élément d'étanchéité (21, 22), et à une première extrémité (27) de l'unité de catalyseur est agencé un module d'extension (23) relié à un module de catalyseur, qui s'étend à travers l'ouverture du boîtier et au moins partiellement à travers le boîtier d'étanchéité lorsque l'unité de catalyseur est insérée dans le puits de boîtier, dans lequel le procédé comprend les étapes suivantes :
- la mise à disposition du réacteur avec l'unité de catalyseur complètement insérée dans le puits de boîtier, le premier élément de recouvrement étant ouvert et le second élément de recouvrement étant fermé ;
- l'ouverture du second élément de recouvrement du boîtier d'étanchéité, moyennant quoi l'unité de catalyseur devient accessible de l'extérieur et le puits de boîtier est rendu étanche par rapport à l'environnement par le premier élément d'étanchéité en contact avec l'unité de catalyseur ;
- un premier retrait de l'unité de catalyseur depuis une première extrémité de l'unité de catalyseur hors du puits de boîtier, dans lequel pendant le premier retrait, le puits de boîtier est rendu étanche par rapport à l'environnement par le premier et le second élément d'étanchéité en contact avec l'unité de catalyseur ;
- un second retrait de l'unité de catalyseur hors du puits de boîtier, jusqu'à ce qu'une seconde extrémité de l'unité de catalyseur se trouve à l'intérieur du boîtier d'étanchéité, dans lequel pendant le second retrait, le puits de boîtier est rendu étanche par rapport à l'environnement par le second élément d'étanchéité en contact avec l'unité de catalyseur ;
- la fermeture du premier élément de recouvrement, moyennant quoi le puits de boîtier est rendu étanche par rapport à l'environnement par le premier élément de recouvrement fermé.

10. Procédé selon la revendication 9, **caractérisé en ce que** le retrait de l'unité de catalyseur (14), en particulier le premier et le second retrait de l'unité de catalyseur, s'effectue à l'aide d'une fixation d'un dispositif de retrait sur le module d'extension.

11. Procédé d'insertion d'une unité de catalyseur (14) dans un réacteur (10), en particulier un réacteur pour la purification de gaz d'échappement, dans lequel le réacteur comprend une ouverture de boîtier (13) débouchant dans un puits de boîtier (12) et une unité de catalyseur (14) agencée à l'intérieur du puits de boîtier, dans lequel l'unité de catalyseur comprend un ou plusieurs module(s) de catalyseur (15), et dans lequel le réacteur comprend un boîtier d'étanchéité (16), dans lequel le boîtier d'étanchéité entoure l'ouverture du boîtier et comprend un premier et un second élément de recouvrement mobiles (19, 20) ainsi qu'un premier et un second élément d'étanchéité (21, 22), et à une première extrémité de l'unité de catalyseur (27) est agencé un module d'extension (23) relié à un module de catalyseur, qui s'étend à travers l'ouverture du boîtier et au moins partiellement à travers le boîtier d'étanchéité, dans lequel le procédé comprend les étapes suivantes :
- la mise à disposition du réacteur avec un puits de boîtier vide, le premier élément de recouvrement étant fermé et le second élément de recouvrement étant ouvert ;
- une première insertion de l'unité de catalyseur depuis une seconde extrémité (28) de l'unité de catalyseur dans le boîtier d'étanchéité, dans lequel le puits de boîtier est rendu étanche par rapport à l'environnement par le second élément d'étanchéité en contact avec l'unité de catalyseur ;
- l'ouverture du premier élément de recouvrement, moyennant quoi le puits de boîtier devient accessible pour l'unité de catalyseur ;
- une seconde insertion de l'unité de catalyseur dans le puits de boîtier, jusqu'à ce que l'unité de catalyseur soit complètement insérée dans le puits de boîtier, dans lequel pendant la seconde insertion, le puits de boîtier est rendu étanche par rapport à l'environnement d'abord par le premier et le second élément d'étanchéité, puis par le premier élément d'étanchéité en contact avec l'unité de catalyseur ;
- la fermeture du second élément de recouvrement.

12. Procédé selon la revendication 11, **caractérisé en ce que** l'insertion de l'unité de catalyseur (14), en particulier la première et la seconde insertion de l'unité de catalyseur, s'effectue à l'aide d'une fixation d'un dispositif d'insertion sur le module d'extension (23).

13. Procédé de remplacement d'une unité de catalyseur usée (14) d'un réacteur (10), en particulier d'un réacteur pour la purification de gaz d'échappement, comprenant les étapes de procédé selon la revendication 9 ou la revendication 10, et selon la revendication 11 ou la revendication 12.

14. Procédé selon la revendication 13, dans lequel le remplacement s'effectue pendant le fonctionnement continu du réacteur (10).
